# EUROPÄISCHE PATENTANMELDUNG

(11) **EP 4 628 844 A1**
(43) Veröffentlichungstag der Anmeldung: **08.10.2025**
(21) Anmeldenummer: 25152309.8
(22) Anmeldetag: 16.01.2025
(51) Int. Cl.: G01C 15/06, G01C 15/00

(54) **VERMESSUNGSMARKE**

(30) Priorität: 17.01.2024 DE 102024101237
(71) Anmelder: Rothbucher, Georg, 83435 Bad Reichenhall (DE)
(72) Erfinder: Rothbucher, Georg, 83435 Bad Reichenhall (DE)
(74) Vertreter: Schaumburg und Partner Patentanwälte mbB

(57) **Zusammenfassung**

Eine Vermessungsmarke (100, 200, 300, 400) zum Vermessen eines Referenzpunktes, beispielsweise an einem Vermessungsobjekt, umfasst ein Reflexionsobjekt (102, 202, 302), das eine kugelförmige Oberfläche (104) aufweist. Die kugelförmige Oberfläche (104) des Reflexionsobjekts (102, 202, 302) hat einen Durchmesser in einem Bereich von 10 bis 50 mm, vorzugsweise in einem Bereich von 20 bis 40 mm. In einem weiteren Aspekt wird ein Verfahren zum Vermessen eines Vermessungsobjekts offenbart. Das Reflexionsobjekt umfasst (102, 202, 302) mindestens eine Anzielmarkierung (108, 304, 406), die von der kugelförmigen Oberfläche (104) nach außen absteht und die eine Längsachse (L) aufweist, die durch einen Mittelpunkt (110) des Reflexionsobjekts (102, 202, 302) verläuft.

## Beschreibung

Die Erfindung betrifft eine Vermessungsmarke zum Vermessen eines Referenzpunkts, sowie ein Verfahren zum Vermessen eines Vermessungsobjekts.

### Hintergrund der Erfindung

Vermessungsmarken werden üblicherweise an ortsfesten Objekten wie zum Beispiel Gebäuden oder im Bereich von Bahngleisanlagen an Elektromasten angebracht. Sie können dort einen Referenzpunkt markieren, der unter Verwendung an sich bekannter Messgeräte wie zum Beispiel Laserscanner, Stereokameras oder Totalstationen vermessen werden soll. Die Vermessungsmethoden basieren regelmäßig auf elektrooptischen Verfahren, so dass Vermessungsmarken gewöhnlich komplexe optische Elemente, wie beispielsweise Tripelspiegel, umfassen. Diese Vermessungsmarken sind anfällig für Beschädigungen und müssen regelmäßig verstellt werden, um sie aus verschiedenen Richtungen zu vermessen.

Es ist Aufgabe der Erfindung, eine robuste Vermessungsmarke und ein Verfahren anzugeben, mit dem ein Referenzpunkt mit Hilfe eines Tachymeters einfach und schnell vermessen werden kann.

Diese Aufgabe wird durch den Gegenstand der unabhängigen Ansprüche gelöst. Vorteilhafte Weiterbildungen sind in den abhängigen Ansprüchen sowie der folgenden Beschreibung angegeben.

### Zusammenfassung

Eine Vermessungsmarke zum Vermessen eines Referenzpunktes, beispielsweise an einem Vermessungsobjekt, umfasst ein Reflexionsobjekt, das eine kugelförmige Oberfläche aufweist. Die kugelförmige Oberfläche des Reflexionsobjekts hat einen Durchmesser in einem Bereich von 10 bis 50 mm, vorzugsweise in einem Bereich von 20 bis 40 mm. Besonders bevorzugt ist es, dass die kugelförmige Oberfläche einen Durchmesser von 30 mm hat. Das Reflexionsobjekt umfasst ferner mindestens eine Anzielmarkierung, die von der kugelförmigen Oberfläche nach außen absteht. Die Anzielmarkierung weist eine Längsachse auf, die durch einen Mittelpunkt des Reflexionsobjekts verläuft.

Die kugelförmige Oberfläche des Reflexionsobjekts ist insbesondere eine äußere Oberfläche des Reflexionsobjekts. Die kugelförmige Oberfläche des Reflexionsobjekts zeigt vorzugsweise von dem Mittelpunkt des Reflexionsobjekts weg.

Die kugelförmige Oberfläche des Reflexionsobjekts ermöglicht es, die Vermessungsmarke einfach aus verschiedenen Richtungen zu erfassen, insbesondere ohne, dass die Orientierung der Vermessungsmarke beziehungsweise des Reflexionsobjekts verändert werden muss. Ferner ermöglichen die Merkmale der Vermessungsmarke eine robuste und kompakte Bauweise. Weiterhin ermöglicht die Abmessung des Reflexionsobjekts ein sicheres und reproduzierbares Anzielen oder Anvisieren der Vermessungsmarke, insbesondere mit Hilfe eines Tachymeters oder einer Totalstation. Beispielsweise ermöglicht das Reflexionsobjekt das einfache und genaue Anzielen oder Anvisieren der Vermessungsmarke mit Hilfe eines Fadenkreuzes des Tachymeters. Die von der kugelförmigen Oberfläche abstehende Anzielmarkierung erlaubt dabei ein besonders sicheres Anzielen der Vermessungsmarke. Beispielsweise kann die Vermessungsmarke mit Hilfe des Tachymeters oder der Totalstation angezielt werden, in dem ein Fadenkreuz eines Visiers des Tachymeters bzw. der Totalstation an der Anzielmarkierung ausgerichtet wird. Die Längsachse der Anzielmarkierung bildet dabei eine Hilfslinie, die das Anzielen der Vermessungsmarke erleichtert. Da die Längsachse der Anzielmarkierung durch den Mittelpunkt des Reflexionsobjekts verläuft, kann der Mittelpunkt des Reflexionsobjekts besonders einfach angezielt werden. Mit Hilfe eines elektrooptischen Entfernungsmessers des Tachymeters ist anschließend eine Entfernungsmessung zwischen dem Tachymeter und der Vermessungsmarke, insbesondere dem Reflexionsobjekt, möglich. Die Vermessungsmarke kann mit Hilfe eines Tachymeters beispielsweise auf eine maximale Entfernung von 200 m, 150 m, 100 m, oder 50 m angezielt und vermessen werden. Dabei ist insbesondere eine Genauigkeit in einem Bereich von 1 bis 2 mm möglich. Die Vermessungsmarke ist insbesondere eine Vermessungsmarke zum Vermessen eines Referenzpunktes mit Hilfe eines Tachymeters.

Die Anzielmarkierung ist beispielsweise eine zylinderförmige oder stabförmige Erhebung auf der kugelförmigen Oberfläche. Eine solche Anzielmarkierung hat eine natürlich ausgezeichnete Längsachse, an der ein Fadenkreuz besonders leicht ausgerichtet werden kann. Die Anzielmarkierung kann aber auch eine längliche Erhebung mit jedem anderen Querschnitt sein, beispielsweise ein ovaler Querschnitt, ein dreieckiger, viereckiger oder ein anderer polygonaler Querschnitt. Bei einer Vielzahl von Anzielmarkierungen sind diese vorzugsweise gleichmäßig auf der kugelförmigen Oberfläche angeordnet. Zusätzlich kann eine weitere Anzielmarkierung an der kugelförmigen Oberfläche entlang einer Ebene angeordnet sein, welche die Rotationsachse der kugelförmigen Oberfläche schneidet.

Bei einer Ausführungsform umfasst das Reflexionsobjekt mindestens zwei Anzielmarkierungen, die an zwei entlang der kugelförmigen Oberfläche gegenüberliegenden Punkten angeordnet sind. Bei einer solchen Ausführungsform liegt der Mittelpunkt des Reflexionsobjekts zwischen den zwei Anzielmarkierungen. Die zwei Anzielmarkierungen bilden somit eine einfach zu erkennende Hilfslinie, die ein sicheres Anzielen des Mittelpunkts des Reflexionsobjekts ermöglicht. Damit kann eine besonders hohe Messgenauigkeit bei der Verwendung der Vermessungsmarke erreicht werden.

Bei einer Ausführungsform umfasst die Vermessungsmarke eine Halterung, wobei das Reflexionsobjekt mit der Halterung verbunden ist. Die Halterung ermöglicht das einfache Befestigen der Vermessungsmarke an einem Vermessungsobjekt, beispielsweise einer Wand. Vorzugsweise ist das Reflexionsobjekt an zwei entlang der kugelförmigen Oberfläche gegenüberliegenden Punkten mit der Halterung verbunden. Das Reflexionsobjekt kann von der Halterung beabstandet angeordnet sein, beispielsweise mit Hilfe eines zylinderförmigen Objekts.

Bei einer Ausführungsform ist das Reflexionsobjekt über mindestens eine der Anzielmarkierungen mit der Halterung verbunden. So wird mit Hilfe der Anzielmarkierung erreicht, dass das Reflexionsobjekt mit einem Abstand von der Halterung angeordnet ist, was ein Anzielen des Reflexionsobjekts noch leichter macht.

Bei einer Ausführungsform ist das Reflexionsobjekt über mindestens zwei der Anzielmarkierungen an zwei entlang der kugelförmigen Oberfläche gegenüberliegenden Punkten mit der Halterung verbunden. Hierdurch wird das Reflexionsobjekt besonders sicher gehalten. Ferner wird durch die zwei Anzielmarkierungen die einfach zu erkennende Hilfslinie gebildet, die ein sicheres Anzielen des Mittelpunkts des Reflexionsobjekts ermöglicht.

Bei einer Ausführungsform hat das Reflexionsobjekt ein kugelförmiges Element und ein um das kugelförmige Element angeordnetes Schalenelement, wobei das Schalenelement die kugelförmige Oberfläche umfasst und zwischen dem kugelförmigen Element und dem Schalenelement eine reflektierende Folie angeordnet ist. Dies ermöglicht eine besonders sichere Entfernungsermittlung mit Hilfe eines elektrooptischen Entfernungsmessers eines Tachymeters. Die kugelförmige Oberfläche ist beispielsweise eine Außenseite des Schalenelements und die Folie ist an einer Innenseite des Schalenelements angeordnet. Die Folie ist insbesondere kugelförmig, entsprechend der kugelförmigen Oberfläche des Reflexionsobjekts. Die reflektierende Folie kann beispielsweise eine Metallfolie oder eine Reflexfolie sein. Die Reflexfolie umfasst vorzugsweise retroreflektierende Elemente.

Bei einer Ausführungsform ist das Reflexionsobjekt aus einem Kunststoff gefertigt, insbesondere aus einem hellen Kunststoff. Dies ermöglicht eine einfache und robuste Bauweise der Vermessungsmarke. Die helle Farbe des Reflexionsobjekts ermöglicht es, das Reflexionsobjekt mit Hilfe eines Tachymeters einfach anzuzielen. Beispielsweise kann das Reflexionsobjekt aus einem weißen oder grauen Kunststoff gefertigt sein. Weiterhin ist das Reflexionsobjekt insbesondere nicht aus einem schwarzen Kunststoff gefertigt. Beispielsweise können das kugelförmige Element und das Schalenelement aus Kunststoff gefertigt sein.

Bei einer Ausführungsform ist das Reflexionsobjekt aus einem Metall gefertigt, insbesondere aus Aluminium oder Stahl. Dies ermöglicht eine einfache und robuste Bauweise der Vermessungsmarke.

Bei einer Ausführungsform ist zumindest die kugelförmige Oberfläche fluoreszierend. Dies ermöglicht das Anzielen der Vermessungsmarke unabhängig von Umgebungslichtverhältnissen. Beispielsweise kann die kugelförmige Oberfläche eine fluoreszierende Farbe umfassen. Als ein weiteres Beispiel kann die kugelförmige Oberfläche aus einem fluoreszierenden Kunststoff gefertigt sein.

In einem weiteren Aspekt wird ein Verfahren zum Vermessen eines Vermessungsobjekts mit der oben beschriebenen Vermessungsmarke bereitgestellt. Das Verfahren umfasst die folgenden Schritte: Anzielen zumindest einer an dem Vermessungsobjekt angeordneten Vermessungsmarke mit Hilfe eines Tachymeters, in dem ein Fadenkreuz des Tachymeters an mindestens einer der Anzielmarkierungen ausgerichtet wird. Ermitteln zumindest eines Messwerts, insbesondere mit Hilfe des Tachymeters, in Bezug zu der zumindest einen angezielten Vermessungsmarke. Beispielsweise kann die Vermessungsmarke, insbesondere ein Reflexionsobjekt der Vermessungsmarke, mit Hilfe des Tachymeters, insbesondere einer Totalstation, angezielt werden. Nachfolgend kann mit Hilfe eines elektrooptischen Entfernungsmessers, wie einem Laserentfernungsmessers, des Tachymeters beispielsweise die Entfernung zu der Vermessungsmarke ermittelt werden.

Beim Anzielen der Vermessungsmarke wird das Fadenkreuz des Tachymeters auf die Vermessungsmarke, insbesondere auf das Reflexionsobjekt der Vermessungsmarke, zentriert. So wird insbesondere das Zentrum der Vermessungsmarke, insbesondere der Mittelpunkt des Reflexionsobjekts der Vermessungsmarke, angezielt. Dabei bildet die Längsachse der Anzielmarkierung eine Hilfslinie, die das Anzielen des Mittelpunkts des Reflexionsobjekts erleichtert. So kann das Fadenkreuz des Tachymeters an der Anzielmarkierung ausgerichtet werden, in dem das Fadenkreuz an dieser Hilfslinie ausgerichtet wird. Der Mittelpunkt des Reflexionsobjekts der Vermessungsmarke kann dabei der Referenzpunkt sein. Alternativ kann die Vermessungsmarke so an einem zu vermessenden Referenzpunkt angeordnet sein, dass das Zentrum des Reflexionsobjekts in einem definierten Abstand zu diesem Referenzpunkt angeordnet ist.

Bei einer Ausführungsform umfasst das Verfahren den Schritt: Bereitstellen von einer zusätzlichen Messinformation der zumindest einen angezielten Vermessungsmarke. Die zusätzliche Messinformation der Vermessungsmarke kann beispielsweise Maße der Vermessungsmarke, insbesondere Maße des Reflexionsobjekts umfassen. Insbesondere umfasst die Maßinformation zumindest einen Radius der kugelförmigen Oberfläche des Reflexionsobjekts. Die Maßinformation der Vermessungsmarke kann auch eine Materialeigenschaft der Vermessungsmarke, insbesondere eine Materialeigenschaft des Reflexionsobjekts umfassen. Das Bereitstellen der Maßinformation ermöglicht es Eigenschaften der Vermessungsmarke insbesondere in dem Schritt Ermitteln zumindest eines Messwerts zu berücksichtigen. Dies ermöglicht somit ein genaues Vermessen des Vermessungsobjekts. Die zusätzliche Messinformation kann insbesondere vor dem Schritt Anzielen der Vermessungsmarke ermittelt und/oder bereitgestellt werden.

So wird beispielsweise die Entfernung zwischen dem Tachymeter und der Vermessungsmarke auf Grundlage der Laufzeit oder Lauflänge eines Messstrahls ermittelt. Beispielsweise unter Berücksichtigung des Radius der kugelförmigen Oberfläche des Reflexionsobjekts kann mit Hilfe der Laufzeit oder Lauflänge des Messstrahls die Entfernung zwischen dem Tachymeter und dem Mittelpunkt des Reflexionsobjekts der angezielten Vermessungsmarke besonders genau ermittelt werden. Die kugelförmige Oberfläche des Reflexionsobjekts ermöglicht dabei, die Entfernung zu dem Mittelpunkt des Reflexionsobjekts aus einer Vielzahl von unterschiedlichen Richtungen zu ermitteln. Beispielsweise kann die Entfernung zum Mittelpunkt des Reflexionsobjekts mit Hilfe des Tachymeters zumindest von einer ersten Position des Tachymeters ermittelt werden und von einer zweiten Position des Tachymeters ermittelt werden, insbesondere ohne, dass eine Verstellung oder Neuausrichtung des Reflexionsobjekts notwendig ist. Dies ermöglicht ein besonders genaues Vermessen des Vermessungsobjekts, insbesondere aus unterschiedlichen Richtungen.

Die zusätzliche Messinformation kann ferner allgemeine Informationen umfassen, die eine elektrooptische Entfernungsmessung mit Hilfe eines Tachymeters beeinflussen können. Beispielsweise kann bei einer Entfernungsmessung mit Hilfe eines Lasers die Eindringtiefe in das Material des Reflexionsobjekts als eine Materialeigenschaft des Reflexionsobjekts berücksichtigt werden. Es wurde erkannt, dass Absorption verschiedener Materialien, insbesondere verschiedener Kunststoffe, einen Messfehler in der Laufzeit bzw. Lauflänge des Messstrahls verursachen können. Bei der Verwendung eines Reflexionsobjekts aus Kunststoff kann sich beispielsweise die gemessene Lauflänge des Messstrahls gegenüber der Verwendung eines Reflexionsobjekts aus einem Metall um mehrere Millimeter verändern. Die Veränderung der Lauflänge kann ferner von Farbe des für das Reflexionsobjekt verwendete Materials abhängen. Insbesondere ein solcher Messfehler kann als die Materialeigenschaft des Reflexionsobjekts bei der Ermittlung des zumindest einen Messwerts berücksichtigt werden, um die Messung wesentlich genauer zu machen. Das Bereitstellen der zusätzlichen Messinformation ermöglicht somit ein besonders genaues Vermessen des Vermessungsobjekts.

So kann unter Zuhilfenahme der zusätzlichen Messinformation eine besonders genaue und gleichzeitig einfache Ermittlung zumindest eines Messwerts und Vermessung des Vermessungsobjekts erreicht werden.

Das Verfahren kann mit den Merkmalen der Vermessungsmarke weitergebildet werden.

### Kurzbeschreibung der Figuren

Weitere Merkmale und Vorteile ergeben sich aus der folgenden Beschreibung, die beispielhafte Ausführungsformen in Verbindung mit den beigefügten Figuren näher erläutert.

Es zeigen:
- Figur 1: eine schematische Ansicht einer ersten Vermessungsmarke,
- Figur 2: eine schematische Ansicht einer zweiten Vermessungsmarke,
- Figur 3: eine schematische Ansicht einer dritten Vermessungsmarke,
- Figur 4: eine schematische Ansicht einer vierten Vermessungsmarke, und
- Figur 5: in schematischer Darstellung den Blick durch eine Zielerfassungsoptik bzw. ein Visier des Tachymeters auf die vierte Vermessungsmarke.

### Ausführliche Beschreibung

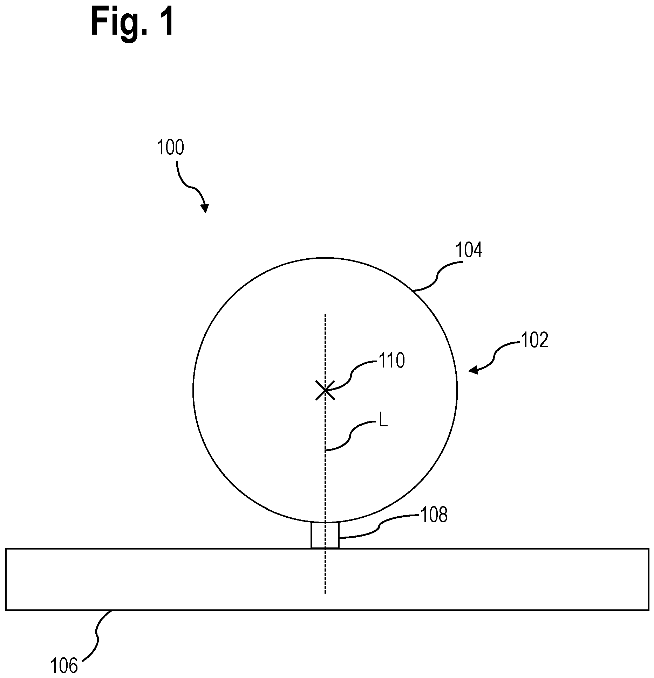

Figur 1 ist eine schematische Ansicht einer Vermessungsmarke 100. Die Vermessungsmarke 100 umfasst ein Reflexionsobjekt 102 mit einer kugelförmigen Oberfläche 104. Weiterhin umfasst die Vermessungsmarke 100 eine Halterung 106. Das Reflexionsobjekt 102 ist rein beispielhaft über eine Anzielmarkierung 108 mit der Halterung 106 verbunden.

Mit Hilfe der Halterung 106 kann die Vermessungsmarke 100 an einem Vermessungsobjekt angeordnet werden. Insbesondere kann die Vermessungsmarke 100 mit Hilfe der Halterung 106 in einer definierten Position zu einem Referenzpunkt des Vermessungsobjekts befestigt werden. Dafür kann die Halterung 106 eine Aufnahme für eine Befestigungssystem umfassen und/oder eine Ausrichtungsmarkierung umfassen, um die Halterung 106 bzw. die Vermessungsmarke 100 in der definierten Position zu dem Referenzpunkt des Vermessungsobjekts auszurichten und zu befestigen.

Die kugelförmige Oberfläche 104 des Reflexionsobjekts 102 hat einen Durchmesser in einem Bereich von 10 bis 50 mm, vorzugsweise in einem Bereich von 20 bis 40 mm. Die Dimension des Reflexionsobjekts 102 ermöglicht ein sicheres Anzielen des Reflexionsobjekts 102 und somit der Vermessungsmarke 100, beispielsweise mit Hilfe eines Tachymeters. Dazu kann das Reflexionsobjekt 102 beispielsweise mit Hilfe einer Zielerfassungsoptik des Tachymeters angezielt werden. Der Verzicht auf komplexe optische Elemente, wie Tripelspiegel, ermöglicht eine robuste und einfache Bauweise der Vermessungsmarke.

Die Kugelform der Oberfläche 104 ermöglicht es, das Reflexionsobjekt 102 und somit die Vermessungsmarke 100 aus einer Vielzahl von Richtungen sicher anzuzielen ohne, dass jeweils eine Neuausrichtung des Reflexionsobjekts 102 in die jeweilige Richtung notwendig ist.

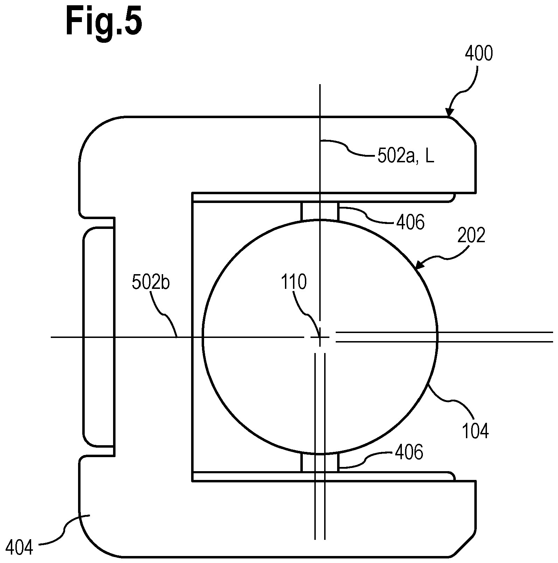

Die Anzielmarkierung 108 ist rein beispielhaft als eine zylinderförmige oder stabförmige Erhebung auf der kugelförmigen Oberfläche 104 ausgebildet und verbindet bei diesem Ausführungsbeispiel das Reflexionsobjekt 102 mit der Halterung 106. Die Zylinderform der Anzielmarkierung 108 definiert eine Längsachse L, die durch einen Mittelpunkt 110 des Reflexionsobjekts 102 verläuft. An dieser Längsachse kann beispielsweise ein Fadenkreuz 500 eines Tachymeters (vgl. Figur 5) ausgerichtet werden, um mit Hilfe des Tachymeters den Mittelpunkt 110 des Reflexionsobjekts 102 anzuzielen. Das Ausrichten des Fadenkreuzes 500 ist unter Bezugnahme auf Figur 5 im Folgenden noch näher beschrieben.

Durch die Anzielmarkierung 108 ist das Reflexionsobjekt 102 von der Halterung 106 beabstandet. Insbesondere ist das Reflexionsobjekt 102 von der Halterung 106 in einer Richtung senkrecht zu der Ebene der Anzielmarkierung 108 beabstandet. Weiterhin kann die Längsachse L der Anzielmarkierung 108 senkrecht zu der Ebene der Anzielmarkierung 108 sein.

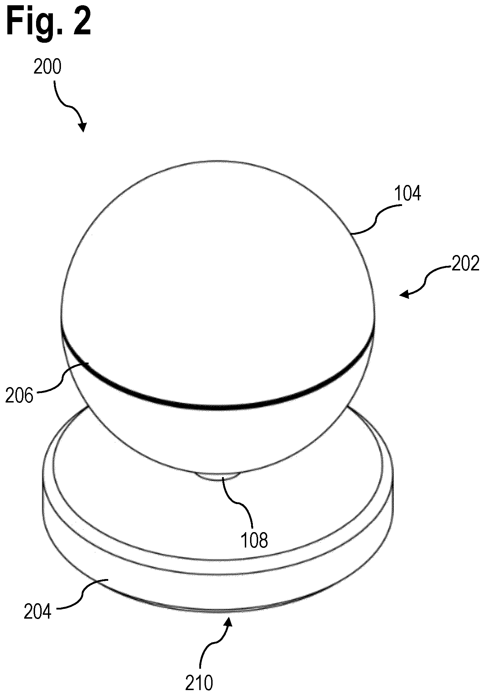

Figur 2 ist eine schematische Ansicht einer Vermessungsmarke 200. Die Vermessungsmarke 200 umfasst ein Reflexionsobjekt 202 mit der kugelförmigen Oberfläche 104. Weiterhin umfasst die Vermessungsmarke 200 eine Halterung 204. Das Reflexionsobjekt 202 ist mit der Halterung 204 verbunden.

Das Reflexionsobjekt 202 hat eine weitere Anzielmarkierung 206, die um den Umfang der kugelförmigen Oberfläche verläuft. Die Anzielmarkierung 206 liegt in einer Ebene, die die Rotationsachse der kugelförmigen Oberfläche 104 schneidet. Insbesondere in Verbindung mit der Anzielmarkierung 108 ermöglicht die Anzielmarkierung 206 das einfache Anzielen des Reflexionsobjekts 202 mit Hilfe des Tachymeters. Insbesondere das Zentrum oder der Mittelpunkt 110 des Reflexionsobjekts 202 kann so sicher angezielt werden.

Die Halterung 204 kann vorzugsweise eine von dem Reflexionsobjekt 202 wegzeigende Auflagefläche 210 haben, die parallel zu der Ebene der Anzielmarkierung 206 ist. Die Standfläche kann beispielsweise an einem Vermessungsobjekt aufliegen, an dem die Vermessungsmarke 200 angeordnet ist. Dies ermöglicht es, die Anzielmarkierung 206 genau zu dem Vermessungsobjekt auszurichten.

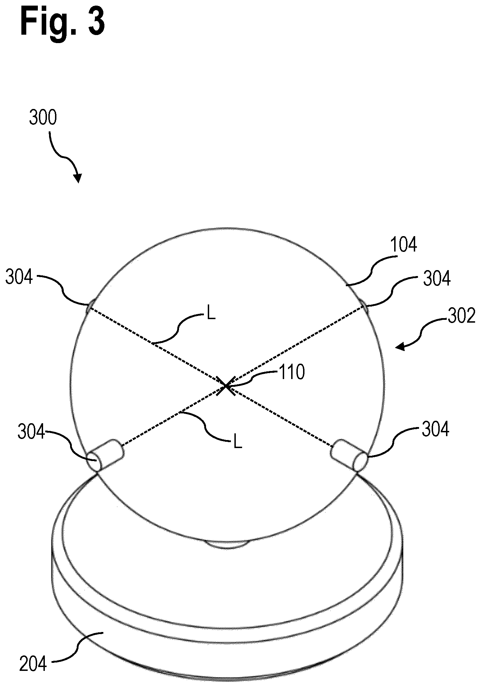

Figur 3 ist eine schematische Ansicht einer Vermessungsmarke 300. Die Vermessungsmarke 300 umfasst ein Reflexionsobjekt 302 mit der kugelförmigen Oberfläche 104. Weiterhin umfasst die Vermessungsmarke 300 die Halterung 204, mit der das Reflexionsobjekt 302 verbunden ist.

Das Reflexionsobjekt 302 umfasst weiterhin Anzielmarkierungen 304. Die Anzielmarkierungen 304 sind rein beispielhaft zylindrische Elemente, die von der kugelförmigen Oberfläche 104 nach außen abstehen. Alternativ können die Anzielmarkierungen 304 von der kugelförmigen Oberfläche 104 vertieft sein. Immer zwei der vier Anzielmarkierungen 304 sind an zwei sich entlang der kugelförmigen Oberfläche 104 gegenüberliegenden Punkten angeordnet. Die Längsachsen L der sich jeweils gegenüberliegenden Anzielmarkierungen 304 verlaufen dabei durch den Mittelpunkt 110 des Reflexionsobjekts 302. Diese Hilfslinien ermöglichen ein besonders sicheres Anzielen der Vermessungsmarke 300, insbesondere des Mittelpunkts 110 des Reflexionsobjekts 302, der dem Referenzpunkt entsprechen kann oder in einer definierten Position zu dem Referenzpunkt des Vermessungsobjekts angeordnet ist. Die Anzielmarkierungen 304 ermöglichen somit das einfache Anzielen des Reflexionsobjekts 302 mit Hilfe eines Tachymeters. Insbesondere das Zentrum oder der Mittelpunkt 110 des Reflexionsobjekts 302 kann so sicher angezielt werden.

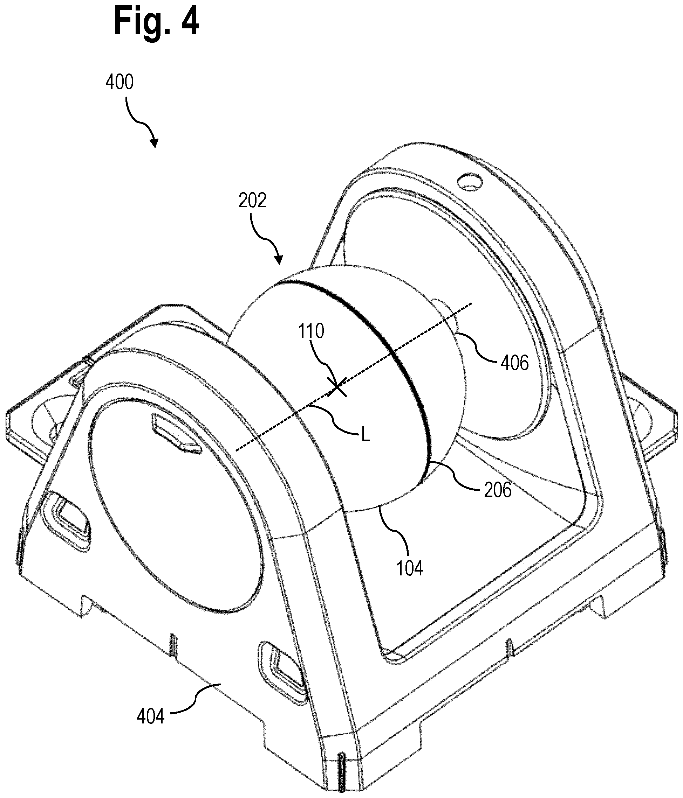

Figur 4 ist eine schematische Ansicht einer Vermessungsmarke 400. Die Vermessungsmarke 400 umfasst das Reflexionsobjekt 202 mit der kugelförmigen Oberfläche 104. Weiterhin umfasst die Vermessungsmarke 400 eine Halterung 404, mit der das Reflexionsobjekt 202 verbunden ist.

Das Reflexionsobjekt 202 ist mit der Halterung 404 an zwei entlang der kugelförmigen Oberfläche 104 gegenüberliegenden Punkten verbunden. Die Verbindung wird durch zwei Anzielmarkierungen 406 realisiert, die rein beispielhaft als zylinderförmige Erhebungen der kugelförmigen Oberfläche 104 ausgebildet sind. Die Zylinderachsen der Anzielmarkierungen 406 definieren jeweils eine Längsachse L, die durch einen Mittelpunkt 110 des Reflexionsobjekts 202 verläuft. Anhand dieser Gedachten Hilfslinie kann das Fadenkreuz 500 des Tachymeters ausgerichtet werden, um den Mittelpunkt 110 des Reflexionsobjekts 202 anzuzielen.

Die Vermessungsmarken 100, 200, 300, 400 können insbesondere in einem Verfahren zum Vermessen eines Vermessungsobjekts eingesetzt werden. Dabei wird zumindest eine an dem Vermessungsobjekt angeordnete Vermessungsmarke 100, 200, 300, 400 mit Hilfe des Tachymeters angezielt. Dazu kann das jeweilige Reflexionsobjekt 102, 202, 302 beispielsweise mit Hilfe einer Zielerfassungsoptik oder eines Visiers des Tachymeters angezielt werden. Insbesondere wird dabei ein Zentrum des Reflexionsobjekts 102, 202, 302 angezielt, beispielsweise der Mittelpunkt 110 des Reflexionsobjekts 202. Die Dimensionen der Reflexionsobjekte 102, 202, 302 und die Anzielmarkierungen 108, 206, 304, 406 ermöglichen ein einfaches und reproduzierbares Anzielen der Reflexionsobjekte 102, 202, 302 mit Hilfe der Zielerfassungsoptik des Tachymeters.

Weiterhin wird durch das Verfahren ein Messwert mit Hilfe des Tachymeters in Bezug zu der zumindest einen angezielten Vermessungsmarke 100, 200, 300, 400, insbesondere des jeweiligen Reflexionsobjekts 102, 202, 302, ermittelt. Insbesondere kann dabei eine Entfernung zu der angezielten Vermessungsmarke 100, 200, 300, 400 ermittelt werden.

Vorzugsweise wird bei dem Verfahren eine zusätzliche Messinformation der Vermessungsmarke 100, 200, 300, 400 bereitgestellt. Die bereitgestellte zusätzliche Messinformation kann dann bei der Ermittlung des Messwerts berücksichtigt werden. Beispielsweise können der Radius der kugelförmigen Oberfläche 102 bei der Ermittlung des Messwerts oder eine Materialeigenschaft der kugelförmigen Oberfläche 102 berücksichtigt werden. Somit kann unter Berücksichtigung der zusätzlichen Messinformation der Mittelpunkt 110 oder das Zentrum des Reflexionsobjekts 102, 202, 302 ermittelt werden. Die Kugelform der Oberfläche 102 ermöglicht weiterhin, dass der Mittelpunkt 110 des Reflexionsobjekts 102, 202, 302 unter Berücksichtigung des Radius aus einer Vielzahl von Richtung ermittelt werden kann. Eine Neuausrichtung oder Verstellung des Reflexionsobjekts 102, 202, 302 ist dafür nicht notwendig.

Figur 5 zeigt in schematischer Darstellung den Blick durch eine Zielerfassungsoptik bzw. ein Visier des Tachymeters. Rein beispielhaft wird unter Verwendung des Tachymeters die Vermessungsmarke 400 angezielt, die anhand von Figur 4 beschrieben ist.

Das Fadenkreuz 500 ist auf den Mittelpunkt 110 des Reflexionsobjekts 202 zentriert. Dies wird erreicht, in dem eine vertikale Linie 502a des Fadenkreuzes 500 an der Längsachse L der zwei Anzielmarkierungen 406 ausgerichtet wird. In Figur 5 überdeckt die vertikale Linie 502a des Fadenkreuzes 500 die Längsachse L. Eine horizontale Linie 502b des Fadenkreuzes 500 ist derart ausgerichtet, dass die horizontale Linie 502b eine gedachte Linie auf der der kugelförmigen Oberfläche 102 überdeckt, an der die kugelförmige Oberfläche 102 in horizontaler Richtung die größte Ausdehnung hat. In anderen Worten: Die horizontale Linie 502b überdeckt in Figur 5 den horizontal angeordneten Großkreis der kugelförmigen Oberfläche 102.

### Bezugszeichenliste

- 100, 200, 300, 400: Vermessungsmarke
- 102, 202, 302: Reflexionsobjekt
- 104: Kugelförmige Oberfläche des Reflexionsobjekts
- 106, 204, 404: Halterung
- 108, 206, 304, 406: Anzielmarkierung
- 110: Mittelpunkt
- 210: Auflagefläche
- 500: Fadenkreuz
- 502a, 502b: Linie
- L: Längsachse

## Patentansprüche

1. Vermessungsmarke (100, 200, 300, 400) zum Vermessen eines Referenzpunktes,
mit einem Reflexionsobjekt (102, 202, 302), das eine kugelförmige Oberfläche (104) aufweist,
wobei die kugelförmige Oberfläche (104) des Reflexionsobjekts (102, 202, 302) einen Durchmesser in einem Bereich von 10 bis 50 mm hat, vorzugsweise in einem Bereich von 20 bis 40 mm hat, und
wobei das Reflexionsobjekt (102, 202, 302) mindestens eine Anzielmarkierung (108, 304, 406) umfasst, die von der kugelförmigen Oberfläche (104) nach außen absteht und die eine Längsachse (L) aufweist, die durch einen Mittelpunkt (110) des Reflexionsobjekts (102, 202, 302) verläuft.

2. Vermessungsmarke nach Anspruch 1, wobei das Reflexionsobjekt (102, 202, 302) mindestens zwei Anzielmarkierungen (304, 406) umfasst, die an zwei entlang der kugelförmigen Oberfläche (104) gegenüberliegenden Punkten angeordnet sind.

3. Vermessungsmarke nach Anspruch 1 oder 2, umfassend eine Halterung (106, 204, 404), wobei das Reflexionsobjekt (102, 202, 302) über mindestens eine der Anzielmarkierungen (108, 406) mit der Halterung (106, 204, 404) verbunden ist.

4. Vermessungsmarke nach Anspruch 3, wobei das Reflexionsobjekt (102, 202, 302) über mindestens zwei der Anzielmarkierungen (406) an zwei entlang der kugelförmigen Oberfläche (104) gegenüberliegenden Punkten mit der Halterung (106, 204, 404) verbunden ist.

5. Vermessungsmarke nach einem der vorhergehenden Ansprüche , wobei das Reflexionsobjekt (102, 202, 302) ein kugelförmiges Element und ein um das kugelförmige Element angeordnetes Schalenelement umfasst, wobei das Schalenelement die kugelförmige Oberfläche umfasst und zwischen dem kugelförmigen Element und dem Schalenelement eine reflektierende Folie angeordnet ist.

6. Vermessungsmarke nach einem der vorhergehenden Ansprüche, wobei das Reflexionsobjekt (102, 202, 302) aus einem Kunststoff gefertigt ist.

7. Vermessungsmarke nach Anspruch 1 oder 2, wobei das Reflexionsobjekt (102, 202, 302) aus einem Metall gefertigt ist.

8. Vermessungsmarke nach einem der vorhergehenden Ansprüche, wobei zumindest die kugelförmige Oberfläche (104) fluoreszierend ist.

9. Verfahren zum Vermessen eines Vermessungsobjekts mit der Vermessungsmarke nach einem der vorhergehenden Ansprüche, umfassend zumindest die folgenden Schritte:
Anzielen der an dem Vermessungsobjekt angeordneten Vermessungsmarke (100, 200, 300, 400) mit Hilfe eines Tachymeters, in dem ein Fadenkreuz (500) des Tachymeters an mindestens einer der Anzielmarkierungen (108, 206, 304, 406) ausgerichtet wird, und
Ermitteln zumindest eines Messwerts in Bezug zu der zumindest einen angezielten Vermessungsmarke (100, 200, 300, 400).

10. Verfahren nach Anspruch 9, wobei das Verfahren umfasst: Bereitstellen von mindestens einer zusätzlichen Messinformation der zumindest einen angezielten Vermessungsmarke (100, 200, 300, 400) aus der folgenden Liste: Maße der Vermessungsmarke, insbesondere Maße des Reflexionsobjekts (102, 202, 302), und eine Materialeigenschaft der Vermessungsmarke (100, 200, 300, 400), insbesondere eine Materialeigenschaft des Reflexionsobjekts (102, 202, 302); und
Ermitteln des zumindest einen Messwerts der Messwert basierend auf der zusätzlichen Messinformation.
